# EUROPEAN PATENT SPECIFICATION

(11) **EP 0 506 912 B1**
(45) Date of publication and mention of the grant of the patent: **05.04.1995**
(21) Application number: 91918132.1
(22) Date of filing: 21.10.1991
(51) Int. Cl.: B26D 7/02, B26D 1/08, B23D 33/08

(54) **CONTINUOUS CYCLE CUTTING DEVICE WITH INTEGRAL PRESSURE PADS, ABLE TO SIMULTANEOUSLY BLOCK AND CUT LAYERS OF ANY NON-RIGID MATERIALS**
VORRICHTUNG ZUM HALTEN UND SCHNEIDEN VON FLEXIBELEN MATERIALIEN
ARCHITECTURE MECANIQUE A CYCLE CONTINU ADAPTE POUR BLOQUER ET COUPER SIMULTANEMENT DES COUCHES DE MATERIAUX NON RIGIDES

(30) Priority: 22.10.1990 IT 31490
(43) Date of publication of application: 07.10.1992
(73) Proprietor: CENTRO SVILUPPO MATERIALI S.p.A., I-00100 Roma (IT)
(72) Inventor: REIS, Gianluigi, I-20122 Milano (IT); MASSOCCO, Giorgio, I-15033 Casal Monferrato (IT)
(74) Representative: Gervasi, Gemma, Dr.
(86) International application number: PCT/IT91/00087
(87) International publication number: WO 92/06830

(56) References cited:
- DE-A- 3 534 467
- FR-A- 1 239 729

## Description

The present invention refers to a device which can resolve the problems inherent in the cutting of non-rigid layered materials and, specifically, in those cases in which the cutting is dependent on a perfect blocking of the material itself, both before and after the cutting section.

In fact, for such types of materials, the cutting can be carried out only if the horizontal dragging due to the impact of the mobile cutting device on the material itself is prevented.

The device in question, which uses suitable blocking means to compress, and hence avoid the dragging due to the friction induced by the compression itself, resolves this problem.

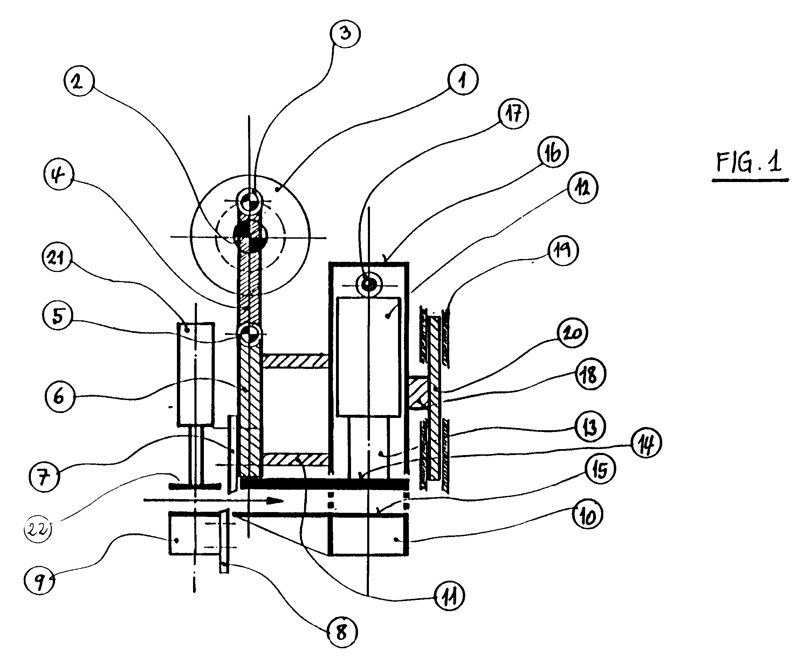

The main components of the cutting device shown in figure 1 are:
- a fixed blocking device situated before a cutting section comprising a mobile and a fixed shear;
- a mobile cutting portion, rigidly connected with a mobile blocking device, situated after the cutting section;
- a thrust eccentric moving the mobile cutting portion through an offset crank gear; and
- a link block connected to the mobile cutting portion by connection means and moving on sliding guides to constrain the mobile cutting portion to a vertical movement.

The functional principle of the device is based on the following logical sequence:
- the advance of the material to be cut to the plane 15;
- the blocking both after and before the fixed 8 and mobile 7 shears by means of a first pressure pad (21, 22) and a second pressure pad (12-13-14) respectively on the fixed plane 9 and on the plane 15 belonging to the mobile support 10;
- the cutting of the blocked material by means of the vertical movement of the mobile shear 7 connected to the mobile block constituted by the mobile cutting portion, the mobile cutting device, the link block and connection means (components 6-11--16-18-20-13-14-10).
   Element 6 is controlled by an eccentric crank gear constituted by components 1-2-3-4-5.
   In addition, the structure 16 houses internally the compression unit 12 linked to it by means of the pin 17. The movement of the entire mobile group is ensured by the special slipways 19 on the link block 20 which constitutes the shoelink block part of the system;
- return of the eccentric crank gear to the "upper dead position" and resetting of the continuous plane 15 with the consequent realignment of all the components being prepared for cutting.

This logical sequence can be automated to function with a continuous cycle synchronised between its various elements.

### TYPOLOGY OF THE EQUIPMENT

The architecture is mainly realised in metallic material and installed in a suitable robust and reliable structure, which is also metallic, complete with all the accessories, alarms and safety devices.

The description above does not indicate in detail the mechanism of the motor unit, as well as those of the ancillary functions, such as the guide, joints, transmission, etc., since they are of no relevance and secondary for the purposes of describing the functioning of the architecture which is the subject of the present invention.

### LIST OF THE MAIN COMPONENTS

- 1: Eccentric
- 2: Eccentric rotation control shaft
- 3: Pin linking the crank 4 to the eccentric 1
- 4: Crank linking the eccentric 1 with the mobile shear wall on the vertical plane
- 5: Pin linking the crank 4 with the mobile wall 6
- 6: Mobile wall of the shear in the vertical plane
- 7: Mobile shear
- 8: Fixed shear
- 9: Fixed linking plane with the shear 8
- 10: Vertical mobile support, linked with the structure to which the mobile shear 7 is connected
- 11: Mobile plane linking wall 6 with the structure 16 supporting the compression unit 12
- 12: Compression unit which acts via a mobile part 13
- 13: Mobile part of the compression unit 12 which acts via plane 14
- 14: Vertical mobile compression plane
- 15: Sliding plane
- 16: Structure supporting the compression unit 12
- 17: Pin linking the compression unit 12 with the structure 16
- 18: Connection between the compression structure 16 with the link block 20
- 19: Link block 20 sliding ways
- 20: Link block
- 21: Compression unit after the mobile shear 7
- 22: Vertical mobile compression plane connected to the compression unit 21.

## Claims

1. Continuous cycle cutting device with integral pressure pads, able to carry out simultaneusly the blocking and cutting of layers of flexible non-rigid material, comprising:
- a fixed blocking device (9, 21, 22) situated before a cutting section comprising a mobile shear (7) and a fixed shear (8);
- a mobile cutting portion (6, 11, 16), rigidly connected with a mobile blocking device (10, 12, 13, 14), situated after said cutting section (7, 8);
- a thrust eccentric (1, 2, 3) moving said mobile cutting portion (6, 11, 16) through an offset crank gear (4); and
- a link block (20) connected to said mobile cutting portion (6, 11, 16) by connection means (18) and moving on sliding guides (19) to constrain said mobile cutting portion (6, 11, 16) to a vertical movement.

2. Continuous cycle cutting device according to Claim 1, where said fixed blocking device comprises a fixed plane (9) and a first pressure pad (21, 22), said material to be cut being blocked between said fixed plane (9) and a plane (22) belonging to said first pressure pad (21, 22), said fixed shear (8) belonging to said cutting section (7, 8) being connected to said fixed plane (9).

3. Continuous cycle cutting device according to Claim 1, where said mobile cutting portion comprises a vertical wall (6) connected through a pin (5) to said crank gear (4) and a mobile plane (11) connecting said vertical wall (6) with a structure (16) supporting said mobile blocking device (10, 12, 13, 14), said structure (16) being connected with said link block (20) through said connection means (18), said mobile shear (7) belonging to said cutting section (7, 8) being connected to said vertical wall (6).

4. Continuous cycle cutting device according to Claim 1, where said mobile blocking device comprises a mobile support (10) rigidly connected to said structure (16) and a second pressure pad (12, 13, 14) connected to said structure (16) through a pin (17), said material to be cut being blocked between a plane (15) belonging to said mobile support (10) and a plane (14) belonging to said second pressure pad (12, 13, 14).

## Patentansprüche

1. Kontinuierlich arbeitende Schneidvorrichtung mit eingebauten Druckstempeln, mit deren Hilfe gleichzeitig das Festhalten und Schneiden von Schichten flexiblen, nicht steifen Materials durchgeführt werden kann, mit
- einer feststehenden Haltevorrichtung (9, 21, 22), die vor der Schneidstelle liegt, die ihrerseits das bewegliche Scherenteil (7) und das feststehende Scherenteil (8) umfaßt:
- einer beweglichen Schneideinrichtung (6, 11, 16), die mit einer beweglichen Haltevorrichtung (10, 12, 13, 14) fest verbunden ist und die hinter der Schneidstelle (7, 8) liegt;
- einer Exzentervorrichtung (1, 2, 3), die die bewegliche Scheidvorrichtung (6, 11, 16) über ein Kurbelzahnrad (4) antreibt; und
- einem Gleitstein (20), der mit der beweglichen Schneidvorrichtung (6, 11, 16) über ein Verbindungsmittel (18) verbunden ist und der sich in Gleitführungen (19) bewegt, um die bewegliche Schneidvorrichtung (6, 11, 16) in eine vertikale Bewegung zu zwingen.

2. Vorrichtung nach Anspruch 1, bei der die feststehende Haltevorichtung eine feste Halteplatte (9) umfaßt sowie einen ersten Druckstempel (21, 22), wobei das zu schneidende Material zwischen der festen Halteplatte (9) und einer Ebene (22) festgehalten wird, die zum ersten Druckstempel (21, 22) gehört, wobei das feststehende Scherenteil (8) zur Schneidstelle (7, 8) gehört und mit der festen Platte (9) verbunden ist.

3. Vorrichtung nach Anspruch 1, bei der die bewegliche Schneidvorrichtung eine vertikale Wand (6) umfaßt, die über einen Stift (5) mit der Kurbel (4) verbunden ist sowie eine bewegliche Platte (11), die die vertikale Wand (6) mit einem Gehäuse (16) umfaßt, das die bewegliche Haltevorrichtung (10, 12, 13, 14) abstützt, wobei das Gehäuse (16) mit dem Gleitstein (20) über das Verbindungsmittel (18) verbunden ist und wobei das bewegliche Scherenteil (7), das zur Schneidstelle (7, 8) gehört, mit der vertikalen Wand (6) verbunden ist.

4. Vorrichtung nach Anspruch 1, bei der die bewgliche Haltevorrichtung eine bewegliche Stützplatte (10) enthält, die mit dem Gehäuse (16) fest verbunden ist, so daß sie einen zweiten Druckstempel (12, 13, 14), der mit dem Gehäuse (16) über einen Stift (17) verbunden ist, wobei das zu schneidende Material zwischen einer Ebene (15), die zur bewegbaren Stützfläche (10) gehört, und einer Ebene (14) festgehalten wird, die zum zweiten Druckstempel (12, 13, 14) gehört.

## Revendications

1. Dispositif de découpe en cycle continu comprenant des patins de pressage monobloc aptes à réaliser simultanément le blocage et la découpe de couches de matériau flexible non rigide, comportant:
- un dispositif de blocage fixe (9, 21, 22) disposé devant une section de découpe comprenant un organe de cisaillement mobile (7) et un organe de cisaillement fixe (8);
- une partie de découpe mobile (6, 11, 16), rigidement reliée à un dispositif de blocage mobile (10, 12, 13, 14), disposé après ladite section de découpe (7, 8);
- un excentrique de poussée (1, 2, 3) déplaçant ladite partie de découpe mobile (6, 11, 16) par l'intermédiaire d'un train de manivelle décalé (4); et
- un bloc à coulisse (20) relié à ladite partie de découpe mobile (6, 11, 16) par des moyens de liaison (18) et se déplaçant sur des guides de coulissement (19) pour obliger ladite partie de découpe mobile (6, 11, 16) à effectuer un déplacement vertical.

2. Dispositif de découpe en cycle continu selon la revendication 1, dans lequel ledit dispositif de blocage fixe comporte un plan fixe (9) et un premier patin de pressage (21, 22), ledit matériel à découper étant bloqué entre ledit plan fixe (9) et un plan (22) appartenant audit premier patin de pressage (21, 22), ledit organe de cisaillement fixe (8) appartenant à ladite section de découpe (7, 8) étant relié audit plan fixe (9).

3. Dispositif de découpe en cycle continu selon la revendication 1, dans lequel ladite partie de découpe mobile comporte une paroi verticale (6) reliée par une broche (5) audit train de manivelle (4) et un plan mobile (11) reliant ladite paroi verticale (6) à une structure (16) supportant ledit dispositif de blocage mobile (10, 12, 13, 14), ladite structure (16) étant reliée audit bloc à coulisse (20) par l'intermédiaire desdits moyens de liaison (18), ledit organe de cisaillement mobile (7) appartenant à ladite section de découpe (7, 8) étant reliée à ladite paroi verticale (6).

4. Dispositif de découpe en cycle continu selon la revendication 1, dans lequel ledit dispositif de blocage mobile comporte un support mobile (10) relié rigidement à ladite structure (16) et un second patin de pressage (12, 13, 14) relié à ladite structure (16) par l'intermédiaire d'une broche (17), ledit matériau à découper étant bloqué entre un plan (15) appartenant audit support mobile (10) et un plan (14) appartenant audit second patin de pressage (12, 13, 14).
